# EUROPÄISCHE PATENTANMELDUNG

(11) **EP 1 589 392 A1**
(43) Veröffentlichungstag der Anmeldung: **26.10.2005**
(21) Anmeldenummer: 04009770.1
(22) Anmeldetag: 24.04.2004
(51) Int. Cl.: G05D 16/20

(54) **Druckregelventil**

(71) Anmelder: THOMAS MAGNETE GmbH, 57562 Herdorf (DE)
(72) Erfinder: Schmitz, Thomas, 57581 Katzwinkel (DE); Haase, Walter, 57290 Neunkirchen (DE)
(74) Vertreter: Grosse, Wolf-Dietrich Rüdiger

(57) **Zusammenfassung**

Ein Druckregelventil (1) bestehend aus einer Ventilhülse (3), in der ein Vorsteuerventil angeordnet ist, welches mit einem, dieses antreibenden Proportionalmagneten (2) in Verbindung steht, einem in der Ventilhülse (3) angeordneten, vom Vorsteuerventil beeinflussten, eine Sackbohrung (14) aufweisenden federbeaufschlagten Ventilschieber (4) als Teil eines Hauptsteuerventils sowie einem gemeinsamen Medienzulauf zur Ventilhülse (3), wobei sich der Medienzulauf in der Ventilhülse (3) in einen ersten Zulauf (15) für das Vorsteuerventil und einen zweiten Zulauf (23) für das Hauptsteuerventil teilt, soll so weitergebildet werden, dass das Druckregelventil (1) auch bei rauhen Bedingungen eine sehr lange Standzeit gewährleistet, ohne dass sich der Filter zusetzt. Dazu wird vorgeschlagen, dass im ersten Zulauf (15) ein Filter (20) angeordnet ist (Fig.1).

## Beschreibung

Die Erfindung betrifft ein Druckregelventil bestehend aus einer Ventilhülse, in der ein Vorsteuerventil angeordnet ist, welches mit einem, dieses antreibenden Proportionalmagneten in Verbindung steht, einem in der Ventilhülse angeordneten, vom Vorsteuerventil beeinflussten, eine Sackbohrung aufweisenden federbeaufschlagten Ventilschieber als Teil eines Hauptsteuerventils sowie einem gemeinsamen Medienzulauf zur Ventilhülse, wobei sich der Medienzulauf im Gehäuse in einen ersten Zulauf für das Vorsteuerventil und einen zweiten Zulauf für das Hauptsteuerventil teilt.

Derartige Druckregelventile sind z. B. durch die DE 28 13 618 C2 bekannt geworden. Um diese vor Verschmutzungen durch im Druckmedium mitgeführte Verunreinigungen zu schützen, werden Filter vorgesehen, die im gemeinsamen Medienzulauf angeordnet sind. Damit wird zwar das komplette Medium, in der Regel Hydrauliköl, gefiltert und gereinigt, bei den großen Durchsätzen setzt sich ein derartiger Filter jedoch leicht zu. Die geforderte Ölmenge kann nicht mehr transportiert werden und das Ventil muss ausgetauscht bzw. zum Zwecke der Reinigung des Filters ausgebaut, auseinander genommen und wieder eingebaut werden.

Diese Ventile werden z. B. an schweren Forstarbeitsmaschinen eingesetzt, bei denen es schnell zur Verschmutzung der Hydraulikflüssigkeit kommen kann, so dass schnelle Ventil- bzw. Filterwechsel mit den entsprechenden Stillstandszeiten und Arbeitsausfall die Folge sind.

Der Erfindung liegt die Aufgabe zugrunde, ein Druckregelventil aufzuzeigen, das auch bei rauhen Bedingungen eine sehr lange Standzeit gewährleistet, ohne dass sich der Filter zusetzt.

Diese Aufgabe wird dadurch gelöst, dass lediglich im ersten Zulauf ein Filter angeordnet ist. Dadurch wird nicht mehr der ganze Medienstrom, der z.B. ca. 20 l pro Minute betragen kann, gefiltert, sondern lediglich der Medienstrom zum Vorsteuerventil, der lediglich ca. 1 l pro Minute beträgt. Bereits durch die erheblich geringeren Mengen zu filternden Öls ist die Standzeit des Filters erheblich verlängert.

Von Vorteil ist, dass das Hauptsteuerventil zwischen Ventilhülse und Ventilschieber ausgebildet ist, und dass sich der gemeinsame Medienzulauf im Bereich des Filters teilt. Damit strömt noch das gesamte Medium von z.B. ca. 20 l pro Minute bis zum Filter. Der Filter wird jedoch nur von der geringen Mediummenge für das Vorsteuerventil durchdrungen. Der Rest des Mediums von immer noch annähernd ca. 20 l pro Minute strömt bei geöffnetem Hauptsteuerventil am Filter vorbei und reißt dabei sich bereits am Filter abgesetzte Verschmutzungen mit, so dass dadurch der Filter während des Betriebes gereinigt wird.

Von Vorteil ist dabei, dass der Medienzufluss zum zweiten Zulauf tangential zur Filteroberfläche verläuft. Damit wird gewährleistet, dass das zum zweiten Zulauf fließende Medium komplett am Filter entlang strömt und möglichst viele Schmutzpartikel vom Filter löst und diesen dabei reinigt.

Es hat sich bewährt, dass der erste Zulauf von mindestens einer Bohrung durch die Wandung des Ventilschiebers gebildet und das der/die Filter am Außenumfang des Ventilschiebers vor der Bohrung/den Bohrungen angeordnet ist/sind. Dadurch wird erreicht, dass die Filteroberfläche nicht zurückgesetzt ist sondern tatsächlich von zum Hauptsteuerventil fließenden Medium überstrichen wird.

Bemerkenswert ist, dass den Bohrungen am Umfang des Ventilschiebers zumindest Abschnitte von Ringnuten zugeordnet sind, und dass die Filter in den Ringnutabschnitten angeordnet sind. Dadurch ist gewährleistet, dass jeder Bohrung Filterelemente zugeordnet sind, deren Fläche größer ist als die Bohrung, so dass auch dann, wenn Bereiche des Filters zugesetzt sein sollten, noch genügend Medium durch den Filter zum Vorsteuerventil gelangen kann.

Vorzugsweise ist am Umfang des Ventilschiebers eine, die Bohrungen verbindende Ringnut vorgesehen, wobei der Filter in der Ringnut angeordnet ist. Hiermit wird erreicht, dass eine große ringförmige Filterfläche gebildet ist, über die gefiltertes Medium in die Ringnut und von dort über die Bohrungen zum Vorsteuerventil gelangen kann. Damit ist eine möglichst große Filterfläche garantiert.

Eine besonders zweckmäßige Ausgestaltung der Erfindung ergibt sich, wenn sich die Ringnut bzw. der Ringnutabschnitt in wenigstens einer Stufe nach außen erweitern und der/die Filter sich auf der Stufe abstützen. Dadurch ist gewährleistet, dass auch bei sich eventuell zusetzendem Filter dieser nicht durch den großen Druck in die Ringnut gedrückt werden kann. Hinzu kommt, dass die Stufe so ausgebildet werden kann, dass der Filter im Wesentlichen mit der Oberfläche des Ventilschiebers abschließt, bestenfalls nur geringfügig zurückgesetzt ist, so dass beim Vorbeiströmen des Hauptstroms ggf. kleine Verwirbelungen entstehen, die wiederum dem Vorgang des Lösens von sich bereits am Filter festgesetzten Verunreinigung dienen.

Es empfiehlt sich, den Filter in die Ringnut lösbar anzuordnen, ggf. zu klemmen, so dass ein schneller Austausch eines verschmutzten Filters gegen einen sauberen Filter möglich wird.

Die Erfindung wird anhand einer Zeichnung näher erläutert.

Dabei zeigen:
- Fig.1: ein erfindungsgemäßes Druckregelventil einschließlich Proportionalmgeten, und
- Fig.2: die Vergrößerung der Druckregelventil- Hauptstufe gemäß der Erfindung.

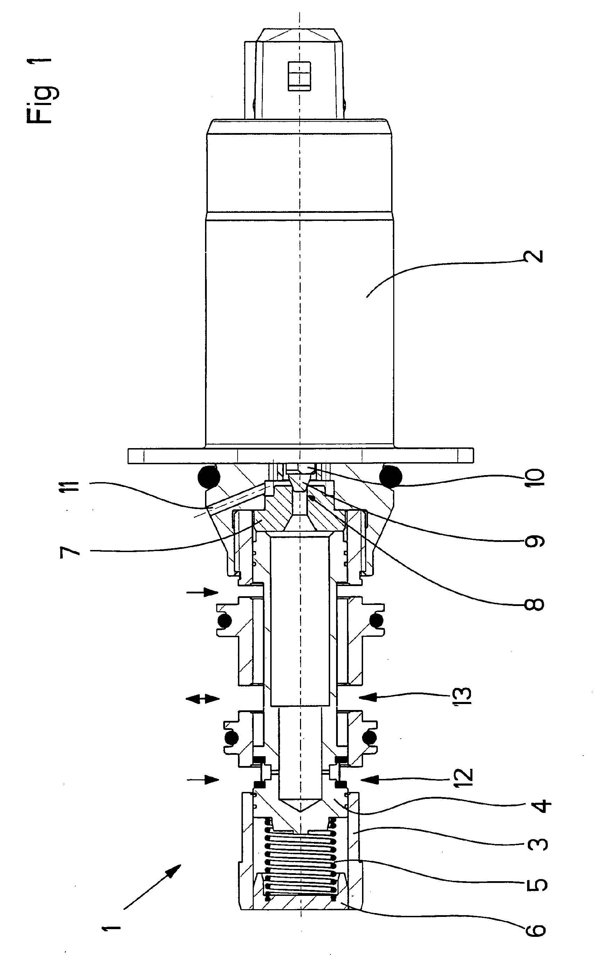

Figur 1 zeigt ein Druckregelventil 1 einschließlich Proportionalmagneten 2. Das Druckregelventil 1 weist eine Ventilhülse 3 auf, in der ein Ventilschieber 4 angeordnet ist. Der Ventilschieber 4 stützt sich über eine Feder 5 an einer Druckferderaufnahme 6 ab. An dem der Druckferderaufnahme 6 gegenüberliegendem Ende der Ventilhülse 3 ist ein Steg 7 angeordnet, auf dem ein Ventilsitz 8 andeordnet ist. Im Ventilsitz 8 ist der Ventilkegel 9 gehalten, der vom Anker 10 des Proportionalmagneten 2 beaufschlagbar ist. Vom Ventilkegel 9 führt ein Abflusskanal 11 in den nicht dargestellten Tank. Die Feder 5 drückt den Ventilschieber 4 gegen den Ventilsitz 8 des Steges 7. In der Ventilhülse 3 ist weiterhin der Pumpenanschluss 12 sowie ein Arbeitsanschluss 13 gezeigt.

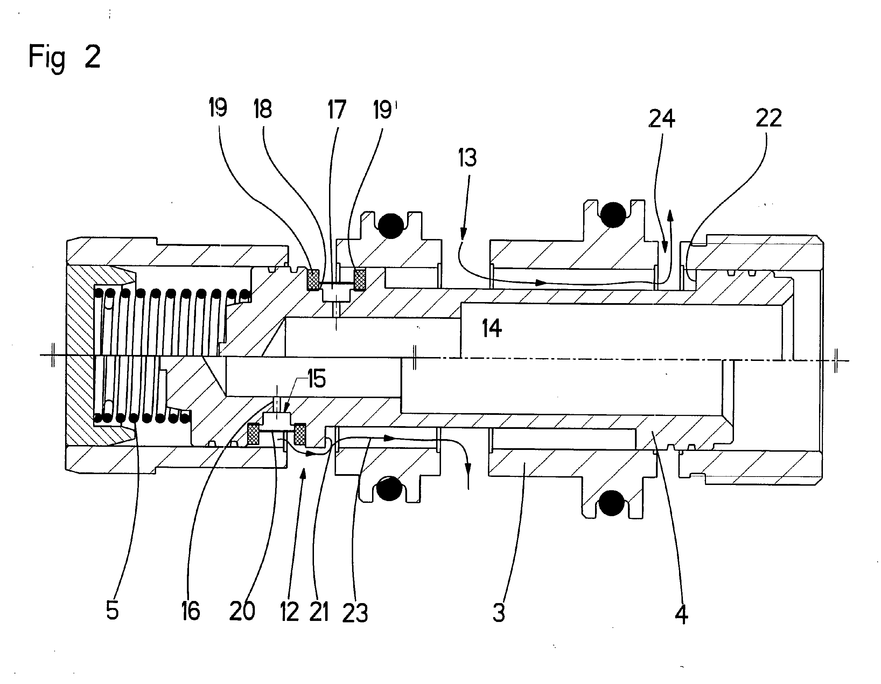

Figur 2 zeigt in der oberen Hälfte das Druckregelventil 1 in unbestromten Zustand, während die untere Hälfte das Druckregelventil 1 in bestromten Zustand darstellt. Der Ventilschieber 4 weist eine Sackbohrung 14 auf. Radial zur Sackbohrung ist als erster Zulauf 15 vorzugsweise eine Bohrung 16 vorgesehen. Es ist jedoch möglich auch mehrere Bohrungen 16 vorzusehen. Die Bohrungen 16 enden in einer Ringnut 17, die sich nach außen über eine Stufe 18 erweitert. Auf der Stufe 18 liegt der Filterrahmen 19, 19' eines Filters 20.

Die Bohrungen 16 dienen als Drossel und begrenzen den Zufluss von Druckmedium zum im Wesentlichen aus dem Ventilsitz 8 und dem Ventilkegel 9 gebildeten Vorsteuerventil.

Der Ventilschieber 4 weist auf seiner Oberfläche Steuerkanten 21, 22 auf, die zusammen mit der Ventilhülse 3 einerseits den zweiten Zulauf 23 und auch den Abfluss 24 zum nicht gezeigten Tank öffnen bzw. schließen können.

### Das Druckregelventil 1 arbeitet wie folgt:

Über den als gemeinsamen Medienzulauf ausgebildeten Pumpenanschluss 12 wird bei unbestromten Proportionalmagneten 2 Druckmedium über den Filter 20 sowie die Bohrungen 16 in die Sackbohrung 15 gedrückt. Der sich in der Sackbohrung aufbauende Druck bewirkt, dass bei feststehendem Ventilkegel 9 der Ventilschieber 4 gegen die Kraft der Feder 5 bewegt wird. Dadurch öffnet sich zwischen dem Ventilsitz 8 und dem Ventilkegel 9 ein Spalt. Das Druckmedium kann über den Abflusskanal 11 abfließen. Die Bewegung des Ventilschiebers hält nur so lange an, bis sich die über die Bohrungen 16 zuströmende Menge an Druckmedium und die über den Abflusskanal 11 abströmende Menge an Druckmedium ausgleicht. Dabei ist die Steuerkante des Ventilschiebers noch derart in der Ventilhülse 3 positioniert, dass der Fluss von Druckmedium vom Pumpenanschluss 12 zum Arbeitsanschluss 13 gesperrt ist.

Wird nun der Proportionalmagnet 2 bestromt, so bewegt sich der Ventilkegel 9 in Richtung auf den Ventilsitz 8 zu. Damit gerät das in die Sackbohrung 14 gepumpte Druckmedium und das aus dem Abflusskanal 11 abfließende Druckmedium außer Gleichgewicht. Der Ventilschieber 4 bewegt sich nunmehr solange in Richtung auf die Feder 5 zu, bis wieder das Gieichgewicht zwischen Zu- und Abfluss hergestellt ist.

Bei dieser Ventilschieberbewegung wird zunächst der Abfluss 14 durch die Steuerkante 22 geschlossen und anschließend der zweite Zulauf 23 durch die Steuerkante 21 geöffnet. Das Maß der Öffnung des zweiten Zulaufs 23 erfolgt dabei in Abhängigkeit der Größe der Bestromung des Proportionalmagneten. Nunmehr fließt Medium, z.B. Hydrauliköl vom als gemeinsamen Medienzulauf ausgebildeten Pumpenanschluss 12 über den ersten Zulauf 15 zum Vorsteuerventil und über den zweiten Zulauf 23 zum Arbeitsanschluss 13. Dabei reißt das zum Arbeitszulauf 13 strömende Medium eventuell auf dem Filter 20 sitzende Verunreinigungen mit.

Verschmutzungen, welche die Bohrungen 16 zusetzen könnten, stören dabei in den großen, am Arbeitsanschluss angeschlossenen Zylindern nicht.

### Bezugszeichenübersicht

- 1.: Druckregelventil
- 2.: Proportionalmagnet
- 3.: Ventilhülse
- 4.: Ventilschieber
- 5.: Feder
- 6.: Druckfederaufnahme
- 7.: Steg
- 8.: Ventilsitz
- 9.: Ventilkegel
- 10.: Anker
- 11.: Abflusskanal
- 12.: Pumpenanschluss
- 13.: Arbeitsanschluss
- 14.: Sackbohrung
- 15.: erster Zulauf
- 16.: Bohrung
- 17.: Ringnut
- 18.: Stufe
- 19.: Filterrahmen
- 20.: Filter
- 21.: Steuerkante
- 22.: 22. Steuerkante
- 23.: 23.zweiter Zulauf
- 24.: Abfluss

## Patentansprüche

1. Druckregelventil (1) bestehend aus einer Ventilhülse (3), in der ein Vorsteuerventil angeordnet ist, welches mit einem, dieses antreibenden Proportionalmagneten (2) in Verbindung steht, einem in der Ventilhülse (3) angeordneten, vom Vorsteuerventil beeinflussten, eine Sackbohrung (14) aufweisenden federbeaufschlagten Ventilschieber (4) als Teil eines Hauptsteuerventils sowie einem gemeinsamen Medienzulauf zur Ventilhülse (3), wobei sich der Medienzulauf in der Ventilhülse (3) in einen ersten Zulauf (15) für das Vorsteuerventil und einen zweiten Zulauf (23) für das Hauptsteuerventil teilt,
**dadurch gekennzeichnet,**
**dass** im ersten Zulauf (15) ein Filter (20) angeordnet ist.

2. Druckregelventil nach Anspruch 1,
**dadurch gekennzeichnet,**
**dass** das Hauptsteuerventil zwischen der Ventilhülse (3) und Ventilschieber (4) ausgebildet ist, und dass sich der gemeinsame Medienzulauf im Bereich des Filters (20) teilt.

3. Druckregelventil nach Anspruch 1 oder 2,
**dadurch gekennzeichnet,**
**dass** der Medienzufluss zum zweiten Zulauf (23) tangential zur Filteroberfläche verläuft.

4. Druckregelventil nach einem der Ansprüche 1 bis 3,
**dadurch gekennzeichnet,**
**dass** der erste Zulauf (15) von mindestens einer Bohrung (16) durch die Wandung des Ventilschiebers (4) gebildet wird, und dass der/die Filter (20) am Außenumfang des Ventilschiebers(4) in Fließrichtung vor der Bohrung/den Bohrungen (16) angeordnet ist/sind.

5. Druckregelventil nach einem der Ansprüche 1 bis 4,
**dadurch gekennzeichnet,**
**dass** den Bohrungen (16) am Umfang des Ventilschiebers (4) zumindest Abschnitte von Ringnuten zugeordnet sind, und dass die Filter (20) in den Ringnutabschnitten angeordnet sind.

6. Druckregelventil nach einem der Ansprüche 1 bis 5,
**dadurch gekennzeichnet,**
**dass** am Umfang des Ventilschiebers (4) eine, die Bohrungen (16) verbindende Ringnut (17) vorgesehen ist, und dass der Filter (20) in der Ringnut (17) angeordnet ist.

7. Druckregelventil nach Anspruch 6,
**dadurch gekennzeichnet,**
**dass** sich die Ringnut (17) bzw. die Ringnutabschnitte in mindestens einer Stufe (18) nach außen erweitern, und dass der/die Filter (20) sich auf der Stufe (18) abstützen.

8. Druckregelventil nach Anspruch 7,
**dadurch gekennzeichnet,**
**dass** der/die Filter (20) in der Ringnut (17) / den Ringnutabschnitten lösbar angeordnet ist/sind.

9. Druckregelventil nach Anspruch 8,
**dadurch gekennzeichnet,**
**dass** der/die Filter (20) in der Ringnut (17) / den Ringnutabschnitten geklemmt ist/sind.
